# EUROPÄISCHE PATENTSCHRIFT

(11) **EP 0 482 293 B1**
(45) Veröffentlichungstag und Bekanntmachung des Hinweises auf die Patenterteilung: **08.03.1995**
(21) Anmeldenummer: 91109757.4
(22) Anmeldetag: 14.06.1991
(51) Int. Cl.: E01H 1/04

(54) **Bodenbearbeitungsmaschine und Fahrwerk**
Groundworking machine and undercarriage
Machine pour travailler le sol et train de roues

(43) Veröffentlichungstag der Anmeldung: 29.04.1992
(73) Patentinhaber: Maschinen-Mohr Inh.: Hermann Mohr, D-91792 Ellingen (DE)
(72) Erfinder: Mohr, Hermann, W-8836 Ellingen (DE)
(74) Vertreter: Matschkur, Götz, Lindner Patent- und Rechtsanwälte

(56) Entgegenhaltungen:
- DE-A- 2 716 644
- GB-A- 1 202 305
- US-A- 4 426 830
- US-A- 4 972 666

## Beschreibung

Die Erfindung betrifft eine Kehrmaschine, insbesondere zur Rasenpflege, die einen Behälter aufweist, in den von einem Boden-Bearbeitungsaggregat aus mittels einer oder mehrerer Bürstenwalzen durch einen im unteren Bereich des Behälters angeordneten Einlaß Sammelgut, beispielsweise Kehrgut befördert wird.

Eine Kehrmaschine etwa dieser Art ist bekannt (GB-A-1 202 305). Zur Straßenreinigung ist sie mit einer Bürstenwalze ausgerüstet, der zwei Tellerbürsten vorgeschaltet sind. Direkt über der hinteren Radachse des Kehrmaschinen-Fahrwerks befindet sich ein Sammelgut-Behälter, der von der Bürstenwalze aus beschickt wird und zum Entleeren um eine Schwenkachse quer zur Fahrtrichtung nach hinten unten gekippt werden kann. Vor dem Behälter ist ein Modul für Maschinenkomponenten (Wasserpumpe z.B.) und Steuerelemente angeordnet. Es kann zusammen mit dem Behälter von einer gemeinsamen Haube abgedeckt werden, die um ein Scharnier quer zur Fahrtrichtung nach oben verschwenkt werden kann. Die Bürstenwalze ist von einem Leitblech umgeben, dessen Auslaß bei zurückgekipptem Sammelgut-Behälter mit dessen Wandung derart bündig abschließt, daß der gesamte Behälter-Innenraum mit Kehrgut beaufschlagt wird. Zur Erhöhung der Effizienz des Bürstenbetriebs wird noch ein sogenannter "pick-up"-Schurz vorgeschlagen, zu dessen maschineller Verstellung aufwendige Komponenten (Hydraulikmotoren, Gestänge und anderes) vorgesehen sein müssen.

Ein bekannter Rasenmäher (DE-A-27 16 644) arbeitet mit einer Schnitturbine, an die ausgangsseeitig eine nach oben führende Rohrleitung für das Luft-Schnittgrasgemisch angeschlossen ist. An deren oberen gekrümmten Ende sind Befestigungsmittel für einen Behälter wie ein Sack vorgesehen, um diesen von oben mit Schnittgras zu befüllen. Ferner ist über der Behälteröffnung im Bereich des Rohrendes ein Luftaustrittskanal realisiert. Dadurch kann allerdings auch Schnittgras leicht entweichen.

Gattungsgemäße Komponenten sind im Rahmen einer bekannten Anhänge-Rasenkehrmaschine zum Aufsammeln von Grünschnitt und Laub sowie zum Vertikutieren und Schlegelmähen (siehe Prospekt der Firma Kalink Areal- und Agrar-Flächenpflegmaschinen-Vertriebs-GmbH in 8137 Berg 2 / Starnberger See) zu einem Bodenbearbeitungssystem integriert. Ein übereinander angeordnetes Doppelbürstensystem transportiert auch nasses und schweres Kehrgut in den darüber gestülpten, großvolumigen Behälter. Zwar soll dessen optimale Befüllung durch eine geschlossene Bauweise erreicht werden, indem der Kehrgut-Auslaß des Bürstensystems und der Einlaßbereich des Behälters zueinander schräg parallel verlaufend ausgeführt sind. Hierbei entstehen jedoch Luftwirbel im Förderkanal vom Bürstensystem-Auslaß zum Behältereinlaß, welche vor allem mit zunehmendem Behälter-Füllstand einer vollständigen Befüllung hinderlich sind. Zum Auskippen des Behälters ist eine hydraulisch betätigte Hochentleerungsmechanik vorgesehen, die nach dem Prinzip der Parallelogramm-Aushebung arbeitet. Hierdurch soll der Behälter über die Hinterkante der gesamten Maschine hinaus anhebbar sein, damit das direkte Beladen von Lastfahrzeugen möglich ist.

Allerdings erfordert die Parallelogramm-Aushebung ein aufwendig aus vielen Teilen, insbesondere Gelenken, konstruiertes Gestänge, was leicht die Zuverlässigkeit beeinträchtigen und die Herstellung verteuern kann. Indem der - schwer beladene - Behälter über die Hinterkante der Gesamt-Maschine hinaus angehoben wird, wird zusätzlich das Problem der Betriebssicherheit aufgeworfen: eine derartige Behälter-Anhebung bewirkt eine Schwergewichtsverlagerung, die zum Umkippen der gesamten Maschine führen kann. Zudem ist bei der Niederdruck-Rasenbereifung mit gegebenenfalls 4 - 6 Rädern besonderen Anforderungen an Geländegängigkeit nicht Rechnung getragen.

Somit wird der der Erfindung zugrundeliegende Problemkreis aufgeworfen, unter Vermeidung all der genannten Nachteile die genannten Komponenten - Bodenbearbeitungsvorrichtung, Behälter, Fahrwerk - so weiter zu entwickeln, daß vor allem bei Integration zu einem Bodenbearbeitungssystem Arbeitssicherheit, -zuverlässigkeit und Betriebseffizienz erhöht und der Aufwand in Konstruktion und Herstellung vermindert wird.

Um diesen Problemkreis anzugehen, wird eine Kehrmaschine nach Patentanspruch 1 vorgeschlagen. Danach bildet der Ausweichraum eine Leer- bzw. Freizone, die einen Ausgleich für den vom Förderstrom verursachten Luftdruck ermöglicht. Zu diesem Zweck ist der Ausweichraum derart angeordnet, daß er in Wirkungsverbindung mit dem Übergangsbereich vom Bearbeitungsaggregat-Ausgang zum Behälter-Eingang steht. Hierdurch läßt sich eine Verlagerung des Ortes der Luftwirbel vom Sammelgut-Förderstromweg bewirken, sodaß letzterer nicht beeinträchtigt ist.

Nach einer Ausbildung der Erfindung ist der Ausweichraum oberhalb des Behälter-Einlasses und/oder des Förderausgangs des Bearbeitungsaggregats angeordnet. Damit wird vorteilhaft von der Tatsache Gebrauch gemacht, daß Sammelgut - wie beispielsweise Kehrgut - schwerer als Luft ist, sodaß letztere ungestört nach oben ausweichen kann.

Nach einer anderen Ausbildung der Erfindung sind die Umwandung des Ausweichraumes, die zur Abschottung gegenüber der Außenumgebung dient, und die Behälterwandung baulich integriert; dies läßt sich in billiger, einfacher Herstellung vor allem dadurch realisieren, daß erfindungsgemäß der Behälter so geformt ist, daß in ihm der Ausweichraum gebildet wird. Behälterwandung und Ausweichraum-Umwandung können dann gleichsam einstückig ausgeführt sein. In diesem Zusammenhang ist es von Vorteil, wenn die Umwandung des Ausweichraumes ein eckiges Profil aufweist. Dies ermöglicht vor allem die Bildung einer zum Boden senkrecht verlaufenden, geradlinigen Stirnwand, die einer etwaigen Fahrtrichtung zugewandt ist. Hierdurch entsteht eine gerade, vordere Wand mit dem Vorteil, daß die - beispielsweise beim Kehren entstehende - große Staubentwicklung vom ziehenden Fahrzeug weitgehendst ferngehalten wird.

Aus den oben genannten Gründen der Ausnutzung der Schwerkraft ist es nach der Erfindung Vorgesehen daß die Umwandung des Ausweichraumes das Bearbeitungsaggregat seitlich und/oder von oben umgibt. Mit anderen Worten, das Bearbeitungsaggregat ist in die Umwandung und gegebenenfalls Behälterwandung von unten eingesetzt.

Nach einem weiteren Merkmal der Erfindung ist die Abgrenzung des Ausweichraumes vom Bereich des Behälter-Einlasses für das beförderte Sammelgut in baulich äußerst einfacher Weise durch eine Strömungsleitwand, z.B. aus Blech, realisiert. Zu diesem kann dann der Sammelgutstrom parallel verlaufen, und hinter der Endkante des Leitbleches können die Luftwirbel in den Frei- bzw. Lerraum ausweichen.

Nach einer Ausbildung der Erfindung wird bei einer Vorrichtung zum Entleeren eines Behälters, der entsprechend den vorstehenden Ausführungen realisiert ist, wobei die Entleer-Vorrichtung mit einem Gestell und einer Stellantriebseinrichtung zum Heben und Schwenken des Behälters versehen ist, vorgeschlagen, daß das Gestell eine oder mehrere Linear-Führungen, gegebenenfalls mit Hub-Begrenzungselementen, aufweist, mit denen Führungsteile bis zum jeweiligen Begrenzungselement ausfahrbar in Eingriff stehen und jeweils über eine Gelenkstelle mit dem Behälter zu dessen Verschwenken verbunden sind. Indem erfindungsgemäß der Behälter sowohl schwenkbar angelenkt als auch linear verschiebbar geführt ist, besteht die Möglichkeit, seinen Bewegungsablauf aufzuspalten, sowohl in eine Linearbewegung als auch eine Schwenk- bzw. Kippbewegung. Diese beiden Bewegungskategorien - Translation und Rotation - können grundsätzlich gleichzeitig oder hintereinander erfolgen. Die Hub-Begrenzungselemente sind für die Realisierung des Grundgedankens dieser Erfindungsalternative nicht zwingend notwendig, sondern dienen lediglich einer vorteilhaften Ausbildung. Schon auf der Basis des Grundgedankens - ohne Hub-Begrenzungselemente - läßt sich über spezifische Steuerung der Stellantriebseinrichtung ein flexibler und mithin an besondere Umgebungsbedingungen gut angepaßter Bewegungsablauf für das Heben und Kippen des Behälters für Sammelgut erzielen.

Nach einer konkreten Realisierung dieses Gedankens greift ein (zur Stellantriebseinrichtung gehöriges) Stellantriebsorgan, das zweckmäßig gegen das Gestell der Vorrichtung abgestützt ist, am Behälter an und bewegt diesen längs der Linearführung und/oder um die Gelenkstelle. Mit besonderem Vorteil ist der Angriffspunkt des Stellantriebsorgans in einer solchen Nähe zur Gelenkstelle plaziert, daß die zum Hochschwenken des Behälters notwendige Stellantriebskraft die zu dessen linearem Hochschieben notwendige Stellantriebskraft übersteigt. Mit anderen Worten, der Hebelarm zwischen Gelenkstelle und Angriffspunkt wird so kurz ausgebildet, daß das im Zusammenhang mit der Stellantriebskraft entstehende Drehmoment (zunächst) gegenüber der Hochverschiebung des Behälters in der Linearführung nicht zum Tragen kommt bzw. untergeht. Dadurch wird eine Zweiteilung des Behälter-Bewegungsablaufs zu dessen Entleerung erzielt, nämlich zuerst eine Hochverschiebungsphase längs der Linearführung und dann eine Kippbewegungsphase um die Gelenkstelle, wenn das Ende der Linearbewegung erreicht ist. Um dieses Linearbewegungsende genau einzustellen und wirkungsvoll zu realisieren, sind die bereits genannten Hub-Begrenzungselemente von außerordentlichem Vorteil: werden diese wirksam, kann der Behälter nicht mehr weiter verschoben werden. Das trotzdem weiter arbeitende Stellantriebsorgan bringt nun die (größere) Stellantriebskraft auf, die zur Erzeugung des für das Hochschwenken des Behälters notwendigen Drehmoments notwendig ist. Damit ist eine eigenständige Behälter-Kippbewegung, die zeitlich erst nach dem Hochfahren erfolgt, sichergestellt.

Nach einer weiteren Ausbildung sind Führungsteile unterschiedlicher Linearführungen zur Bewegungssynchronisation miteinander verbunden. In weiterer, konstruktiver Ausgestaltung ist die Linearführung als Hohlschiene ausgeführt, in der als Führungsteil eine Stange längsverschiebbar und teleskopartig ausfahrbar aufgenommen ist. An dem Stangenende kann dann eine Gelenkstelle zum Behälter angeordnet sein. Im Zusammenhang mit der Verbindung zur Bewegungssynchronisation und der Ausführung als Hohlschiene sind mit besonderem Vorteil gegenüberliegende Längsschlitze in unterschiedlichen Hohlschienen ausgebildet, welche Längsschlitze von einer Strebe durchsetzt sind, die die Führungsteile, insbesondere Führungsstangen der jeweiligen Hohlschienen miteinander verbinden. Bei dieser Ausführung sind also mindestens zwei Linearführungen vorhanden, mit denen der Behälter über jeweilige Führungsteile in Eingriff steht. Indem die Führungsteile miteinander verstrebt sind, ist eine stabile Linearbewegung gewährleistet.

Um die Ladefläche eines Nutzfahrzeugs mit dem Inhalt des Behälters vollständig befüllen zu können, ist nach einer weiteren Ausbildung vorgesehen, einen Winkel zwischen der Boden-Aufstandsfläche und der Linearführung von weniger als 90° auszubilden. Hierdurch verläuft die Linearführung in einer zum Boden geneigten Schräge, und wenn der Behälter beim Hochfahren die Hubbegrenzung erreicht hat, läßt er sich über die Hinterkante der Gesamtvorrichtung hinaus über die Ladefläche des Nutzfahrzeugs kippen.

Es liegt im Rahmen der Erfindung, teleskopartig ausfahrbare Stellzylinder, die vorzugsweise hydraulisch arbeiten, als Antriebsorgane vorzusehen. Der Vorteil besteht darin, daß die Zylinder nur halb so lang wie die Überlade- bzw. Auskipphöhe sind und sehr wenig Öl benötigen.

Nach einer Weiterbildung der Erfindung ist eine Arretiereinrichtung zum Feststellen des Behälters gegenüber der Linearführung, vor allem, wenn die Hub-Begrenzungselemente wirksam werden, vorgesehen. Dadurch wird gewährleistet, daß der Behälter nach vollständigem Entleeren zunächst ausschließlich zurückgekippt wird, während die Stellzylinder oder sonstigen Antriebsorgane wieder eingefahren werden; eine Rück-Linearbewegung aus der angehobenen Stellung wird durch die Arretiereinrichtung verhindert. Mit besonderem Vorteil ist die Arretiereinrichtung derart ausgebildet, daß sie sich aufgrund einer Behälter-Schwenkbewegung automatisch löst. Vor allem, wenn die Rück-Schwenkbewegung nahezu ihr Ende erreicht hat, wird die Feststellung des Behälters durch die Arretierung beseitigt, und an die Rückkipp-Bewegungsphase kann sich die lineare Senk-Bewegungsphase anschließen.

In konstruktiver Ausgestaltung umfaßt die Arretiereinrichtung eine am Gestell stationär angeordnete Raste und ein mit den Bewegungen des Führungselements gekoppeltes und/oder von einer Behälter-Hub/Schwenkbewegung betätigbares Ein- bzw. Ausrastorgan. Die Behälter-Linear-, insbesondere Hubbewegung, führt zum Einrasten, während die Schwenkbewegung auf das Rastorgan zum Ausrasten einwirkt.

Zur Geräuschdämpfung und Rückstellung gegenüber der Betätigung durch den Behälter ist es von Vorteil, das Ein/Ausrastorgan mit einer Federpufferung zu versehen, beispielsweise in Form einer Schraubenfeder.

Eine weitere Ausbildung der Erfindung dient der Realisierung eines Hub-Begrenzungselements: in der Hohlschiene ist eine Aussparung ausgebildet, deren vorzugsweise obere Begrenzungs-Kante einen Anschlag für einen Vorsprung der Führungsstange bildet. Bewegt sich die Führungsstange nach oben, wird der daran ortsfest angebrachte Vorsprung mitbewegt und schlägt schließlich an der Kante der Aussparung an. Dann ist ein weiteres Verschieben der Führungsstange und mithin eine Linearbewegung des Behälters unterbunden; dieser kann bei weiterer Krafteinwirkung durch die Antriebseinrichtung dann nur noch verschwenkt bzw. gekippt werden.

Beide genannten Komponenten - Vorrichtung zur Bodenbearbeitung und zur Behälter-Entleerung - sind vorzugsweise fahrbar ausgebildet, nämlich auf einem Chassis mit Rädern bzw. einem Fahrwerk montiert. Vor allem bei der Bodenbearbeitung in unebenem Gelände ergibt sich die Forderung nach Anpassungsfähigkeit, Geländegängigkeit und insbesondere gleichmäßige Übertragung des Bodendrucks auf die Räder und deren Bereifung, gegebenenfalls Mehrfachbereifung. Diesem Problem wird im Rahmen des vorliegenden Erfindungskomplexes dadurch begegnet, daß bei den genannten Vorrichtungen ein Fahrwerk vorgesehen wird, das Radachsen - vorzugsweise mit beidseits angebrachten Rädern (Doppelbereifung) - aufweist, die um eine zur Bodenaufstandsfläche parallele Schwenkachse schwenkbar bzw. pendelbar aufgehängt sind. Das Pendeln, d.h. das abwechselnde Auf- und Niederschwingen der Radachsenden im Falle der Doppelbereifung, findet in einer Ebene senkrecht zur Bodenaufstandsfläche und quer zur Fahrtrichtung statt; mit anderen Worten, die Schwenk- bzw. Wippachsen verlaufen normalerweise in Fahrtrichtung. In einer besonderen Ausbildung ist das Fahrwerk mit einer Mehrzahl voneinander unabhängig pendelnder Radachsen ausgestattet. Mit dieser Art von "Pendelachsen" in Verbindung mit der Mehrfachbereifung wird eine weitgehend vollständige Anpassung an Geländeunebenheiten und eine geringe Belastung des zu pflegenden Bodens erreicht, indem der Druck aufgrund des Fahrzeuggewichts gleichmäßig auf mehrere Reifen verteilt übertragen wird.

In dem soeben erörterten Zusammenhang steht eine weitere Erfindungsausbildung, welche auf eine Vorrichtung zur Radaufhängung gerichtet ist, die mit den zuvor erörterten Gestaltungen kombinierbar ist : Zur Radaufhängung wird erfindungsgemäß vorgeschlagen, ein oder mehrere in Fahrtrichtung verlaufende Scharniergelenke vorzusehen, über die quer verlaufende Radachsen am Fahrwerksrahmen schwenkbar angebracht bzw. aufgehängt sind. Durch die Verwendung von Scharniergelenken, die Drehbewegungen nur um eine Achse zulassen, ist eine stabile Einhaltung der Fahrtrichtung gewährleistet. Mit besonderem Vorteil sind zwei oder mehr Scharniergelenke derart hintereinander gereiht, daß ihre Längsrichtungen oder Drehachsen in einer gemeinsamen Flucht liegen; dieser Gruppe von Scharniergelenken ist im Sinne dieser Weiterbildung eine Radachse gemeinsam zugeordnet. Damit wird der Vorteil erzielt, daß die mechanisch-dynamisch starken Belastungen, denen die Scharniergelenke bei Einsatz in Bodenbearbeitungs- und Landschaftspflege-Maschinen naturgemäß ausgesetzt sind, gleichmäßig verteilt und mithin nicht gravierend zur Auswirkung kommen. Dies ergibt eine Erhöhung der Zuverlässigkeit und Lebensdauer. Die Zuordnung zu einer gemeinsamen Radachse erfolgt konstruktiv dadurch, daß die fluchtenden Scharniergelenke über einen an diesen schwenkbar angebrachten Tragbügel verbunden sind, an dem die Radachse befestigt ist. Die beiden Schenkel des Tragbügels enden hierbei an Zapfen oder Bolzen, die in je eine Führung zur Bildung des Scharniers gesteckt sind und sich um die Scharnierachse drehen. Der Befestigung der Scharniergelenke am Fahrwerkrahmen können hohle Profilstücke, vorzugsweise aus Eisen, dienen.

Um bei den zuvor genannten, fahrbar ausgebildeten Vorrichtungen den Fahrzeug-Schwerpunkt je nach Be/Entladestellung und/oder Belastungszustand ändern zu können, wird im Rahmen einer weiteren Erfindungsalternative bei einem Fahrwerk vorgeschlagen, daß eine oder mehrere Radachsen am Fahrwerk-Rahmen in Fahrtrichtung verschiebbar gelagert sind, wobei die Verschiebung mittels eines manuell ansteuer- und/oder betätigbaren Stell-Antriebsorgans erfolgt. Mit dieser Versetzbarkeit einer Radachse entlang des Fahrwerks wird vor allem bei der oben erläuterten Behälter-Entleervorrichtung der Vorteil erzielt, daß beim Entladevorgang des Behälters in seiner hochgehobenen Stellung die Radachse direkt in einer vertikalen Flucht unter der Schwenk- bzw. Kippachse des Behälters verschoben werden kann. Dabei wird, wenn die Entleer-Vorrichtung mit Behälter auf einem Anhänger montiert ist, die Hinterachse des Zugfahrzeugs entlastet oder auch ein Gesamtfahrzeug angehoben. Ein weiterer Vorteil besteht in der Anpassungsfähigkeit, indem die Achsbelastung mit Hilfe der Verschiebeachse eingestellt werden kann.

In Weiterbildung dieses Gedankens sind mehrere, getrennte Radachsen voneinander unabhängig verschiebbar gelagert und stehen mit einem gemeinsam zugeordneten Stell-Antriebsorgan in Wirkungsverbindung. In weiterer Konkretisierung sind die getrennten Radachsen über eine Synchronisiereinrichtung, beispielsweise eine Querstrebe oder -stange, ein Synchrongetriebe oder einen Kettentrieb, mit dem Antriebsorgan verbunden. Die Radachsen können dann zeitgleich und entweder in Fahrtrichtung auf gleicher Höhe liegend oder symmetrisch über das Fahrwerk verteilt positioniert werden. Für die praktische Realisierung des Antriebsorgans liegen hydraulische und/oder pneumatische Stellzylinder, manuelle Kurbeltriebe oder batteriebetriebene Elektromotoren im Rahmen der Erfindung.

Eine konstruktiv zweckmäßige Realisierung der Verschiebbarkeit der Radachsen ergibt sich bei Verwendung von in Fahrtrichtung verlaufenden Führungsschienen, längs derer sich eine oder mehrere Radachsen bewegen können. Zum Schutz vor Umgebungs- und Witterungseinflüssen ist eine gehäuseartige Abdeckung für die Führungsschiene zweckmäßig.

Um die Handhabbarkeit, Wartbarkeit und Sicherheit vor Stößen durch sperrige Bodenhindernisse zu erhöhen, ist nach einer weiteren Ausbildung der Erfindung bei dem Fahrwerk einer fahrbaren Vorrichtung zur Bodenbearbeitung, wie sie insbesondere oben erläutert ist, ein Bodenbearbeitungsaggregat vorgesehen, das über ein Boden-Tastrad gegen dessen Bodenaufstandsfläche abstützbar und über eine am Fahrwerkchassis oder -Rahmen angelenkte Parallelogrammführung bewegbar, insbesondere nach oben aushebbar, geführt ist. Das Bodenbearbeitungsaggregat kann dabei beispielsweise ein Mäh- oder Kehrwerk sein. Indem es gegenüber dem Boden und etwaigen zugehörigen Hindernissen mittels des Tastrads abgestützt ist, übertragen sich Stöße des Hindernisses auf das Tastrad und führen zu einer Auslenkung und einem entsprechenden Ausweichen des Aggregats vor dem Hindernis aufgrund der flexiblen Kopplung über die bewegliche Parallelogrammführung an den Fahrwerks-Rahmen.

In konstruktiver Ausgestaltung dieses Gedankens ist das Tastrad mit dem Bodenbearbeitungsaggregat oder dessen Gehäuse ortsfest verbunden. Nach einer anderen konstruktiven Ausbildung ist das Bodenbearbeitungsaggregat in der Parallelogrammführung an vier Punkten und/oder lose oder lösbar aufgeknüpft oder aufgehängt, sodaß es zu Wartungszwecken leicht vom Fahrwerk abgenommen werden kann.

Weitere Einzelheiten, Merkmale und Vorteile im Rahmen der Erfindung ergeben sich aus der nachfolgenden Beschreibung bevorzugter, erfindungsgemäßer Ausführungsbeispiele sowie anhand der Zeichnungen. Diese zeigen in:
- Fig. 1: eine Vorrichtung zur Bodenbearbeitung in perspektivischer Darstellung,
- Fig. 2: einen schematischen Längsschnitt durch diese Vorrichtung,
- Fig. 3 - 6: jeweils in perspektivischer Darstellung eine Bodenbearbeitungs-Maschine mit erfindungsgemäßer Behälter-Entleervorrichtung in unterschiedlicher Stellung,
- Fig. 7 - 9: in Seitenansicht einen erfindungsgemäßen Arretiermechanismus für die Entleer-Vorrichtung in unterschiedlichen Stellungen,
- Fig. 10: die Bodenbearbeitungsmaschine mit einer erfindungsgemäßen Radaufhängung in Rückansicht,
- Fig. 11 u. 12: jeweils eine vergrößerte Ansicht der Radaufhängung,
- Fig. 13: eine Schnittansicht gemäß der Linie XIII-XIII in Fig. 11,
- Fig. 14: in perspektivischer Darstellung das erfindungsgemäße Fahrwerk für die Bodenbearbeitungsmaschine und
- Fig. 15 u. 16: in jeweils schematischer Seitenansicht das lose in einer 4-Punkt-Parallelführung aufgeknüpfte Bodenbearbeitungsaggregat der Bodenbearbeitungsmaschine in unterschiedlichen Stellungen.

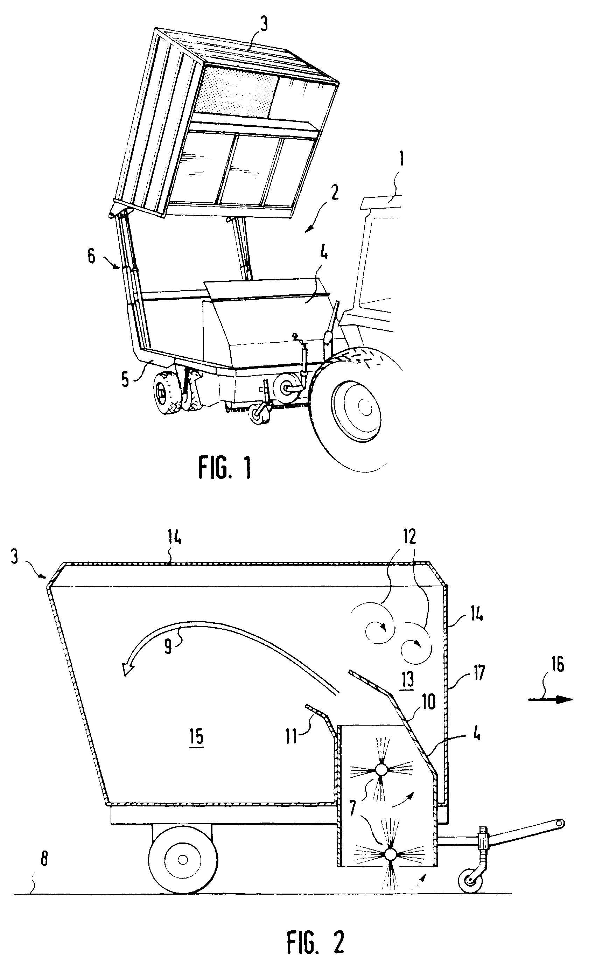

Gemäß Fig. 1 ist an einem Zugfahrzeug 1 eine Bodenbearbeitungsmaschine 2, im gezeichneten Beispiel eine Rasenkehrmaschine, angehängt. Diese besteht aus einem Behälter 3 für Sammelgut, einem Boden-Bearbeitungsaggregat 4, aus dem das Sammelgut in den Behälter geschleudert wird, einem Fahrwerk 5 und einer daran anschließenden Behälter-Entleervorrichtung 6. Der Behälter 3 ist in einer hochgehobenen und gekippten Stellung gezeichnet.

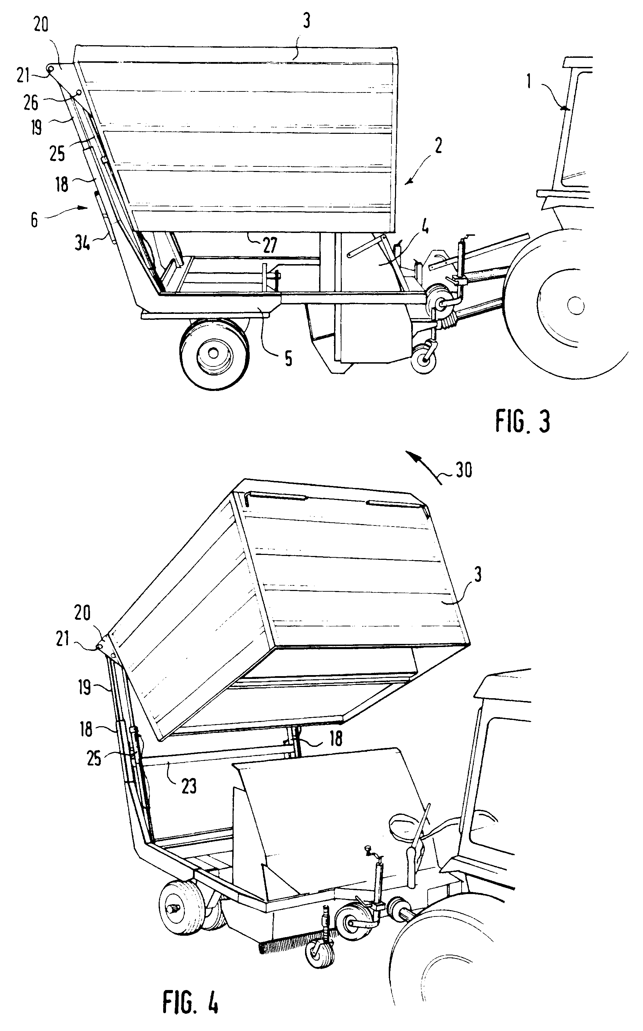

Gemäß Fig. 2 ist der Behälter 3 zurückgekippt und zurückgesenkt, sodaß er den oberen Teil des Boden-Bearbeitungsaggregats 4 umgibt. In diesem rotieren zwei übereinander angeordnete Transport-Bürstenwalzen 7, welche vom Boden 8 (nicht gezeichnetes) Sammelgut erfassen und im Rahmen eines Sammelgut-Förderstromes 9 in den Behälter 3 befördern. Die Bildung dieses Förderstromes 9 wird durch Strömungsleitbleche 10, 11 des Bearbeitungsaggregats 4 und des Behälters 3 unterstützt. Diese bilden gleichsam einen Stutzen für den Auslaß des Bearbeitungsaggregats 4 und/oder den Einlaß in den Behälter-Innenraum 3. Aufgrund der Sog- und Schleuderwirkung, die durch die Bürstenwalzen 7 ausgelöst wird, entstehen unvermeidlich Luftdruck-Unterschiede und Luftwirbel 12. Zur Kompensation dieser Luftdruck-Unterschiede und zum Auffangen der Luftwirbel 12 dient erfindungsgemäß ein Ausweichraum 13, dessen Umwandung bzw. Abgrenzung gegenüber der äußeren Umgebung von der Wandung 14 des Behälters 3 mitgebildet wird. Hierdurch können sich die Luftwirbel 12 nicht mehr störend auf den Förderstrom 9 auswirken, und der eigentliche Behälter-Sammelgutraum 15, der sich in Fahrtrichtung 16 gesehen hinter dem Bearbeitungsaggregat 4 befindet, kann vollständig gefüllt werden. Dagegen sind die Luftwirbel 12 aufgrund des Ausweichraums 13 nach vorne über das Boden-Bearbeitungsaggregat 4 verlegt. Die Wandung 14 des Behälters 3 und Ausweichraums 13 weist eckiges Profil auf und bildet im vorderen Bereich eine gerade Gehäuse-Stirnwand 17 zum Fernhalten von Staub gegenüber dem Fahrerhaus des Zugfahrzeugs 1.

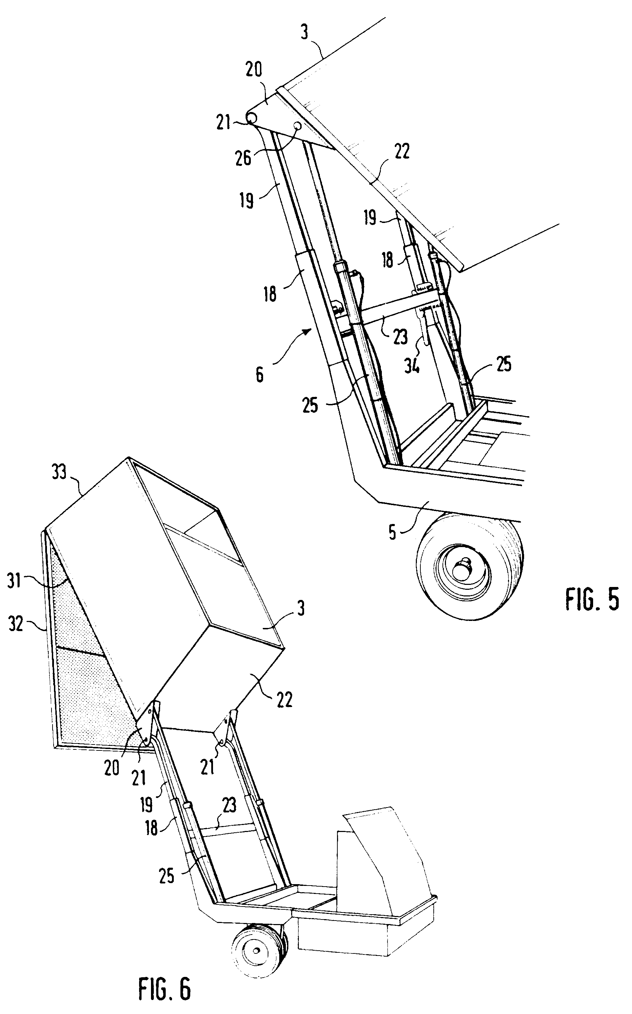

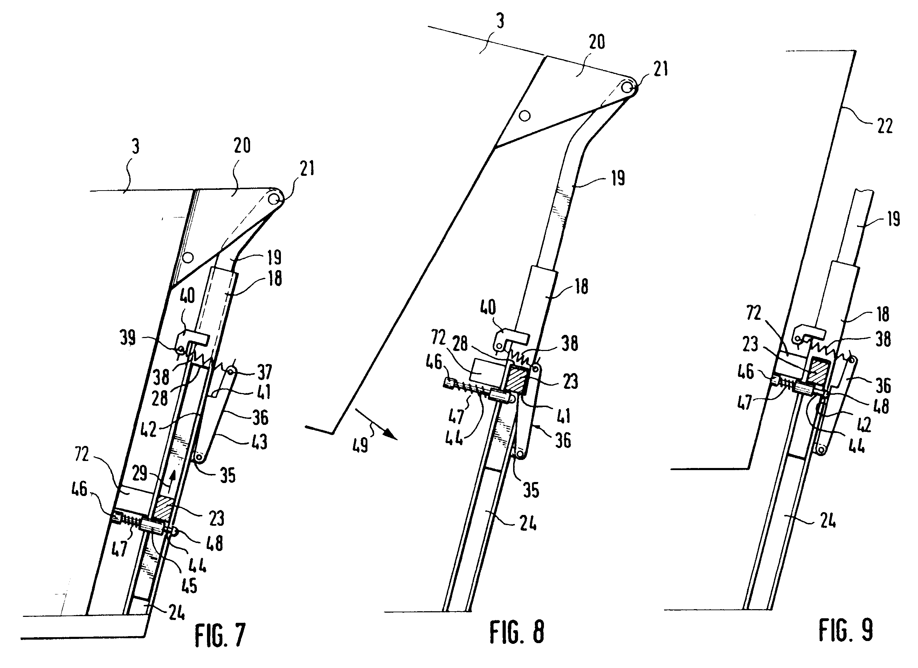

Gemäß Fig. 3 - 6 weist die Entleervorrichtung 6 zwei parallele, nach oben gerichtete Hohlschienen 18 als Linearführungen auf. Darin sind Führungsstangen 19 teleskopartig ausfahrbar aufgenommen. Die oberen Enden dieser Führungsstangen 19 tauchen in dreieckige und im Querschnitt U-förmige Verbindungsglieder 20, die an den Behälter 3 befestigt sind. Sowohl die Enden der Führungsstangen 19 als auch die zugehörigen Verbindungsglieder 20 sind jeweils von einem Bolzen 21 durchsetzt, so daß hierdurch Scharniergelenke gebildet werden. Deren Drehachsen liegen in einer gemeinsamen Flucht, die quer zur Fahrtrichtung 16 (vgl. Fig. 1) hinter der Rückwand 22 des Behälters 3 verläuft. Die beiden Führungsteile 19 sind durch eine querverlaufende Synchronisationsstrebe 23 verbunden, die die Hohlschienen 18 über gegenüberliegende Längsschlitze 24 (vgl. Fig. 7 - 9) durchsetzt. Hierdurch wird ein zeitgleiches und koordiniertes Verschieben der beiden Führungsstangen 19 in den jeweiligen Hohlschienen 18 sichergestellt. An den beiden Verbindungsgliedern 20 sind ferner, wie insbesondere aus Fig. 5 ersichtlich, jeweilige Hydraulik-Stellzylinder 25 angelenkt. Deren dieser Anlenkstelle 26 entgegengesetzte Enden sind gegen den unteren, am Fahrzeugrahmen 50 angrenzenden Teil der Entleervorrichtung 6 abgestützt. Die Stellzylinder 25 sind in ihrem eingefahrenen Zustand nur etwa halb so lang wie die Auskipp- und Überladehöhe der Rückwand 22 des Behälters 3 im hochgefahrenen und umgekippten Zustand (vgl. Fig. 6). Sowohl die Rückwand 22 als auch die Hohlschienen 18 und Stellzylinder 25 verlaufen gegenüber der Bodenaufstandsfläche nicht senkrecht, sondern schräg geneigt, um ein Anheben des Behälters 3 über die Hinterkante der Gesamtvorrichtung hinaus zu erreichen (vgl. Fig. 6). Die Rückwand 22 bildet in dieser Stellung eine schiefe Ebene, auf der das Sammelgut auf eine Ladefläche eines (nicht gezeichneten) Nutzfahrzeugs gleiten kann.

Die Wirkungsweise der Entleervorrichtung ist wie folgt: Gemäß Fig. 3 sind die Stellzylinder 25 bereits teilweise ausgefahren. Der zwischen dem Bolzen bzw. Scharniergelenk 21 und der Stellzylinderanlenkstelle 26 gebildete Hebelarm ist jedoch so klein, daß die Kraft der Stellzylinder nicht in eine Hoch-Verschwenkung des Behälters 3, sondern (zunächst) nur in eine nach oben führende Linearbewegung längs der Hohlschienen 18 umgesetzt wird. Dem entspricht die in Fig. 3 gezeichnete Stellung, in der der bereits angehobene Behälterboden 27 noch parallel zur gegebenenfalls horizontalen Bodenabstandsfläche verläuft.

Mit weiter zunehmender Hubbewegung des Behälters 3, der Führungsstangen 19 und der von diesen jeweils ortsfest vorspringenden Synchronisationsstrebe 23 wird die obere Endkante 28, welche den Längsschlitz 24 der Hohlschiene 18 begrenzt (vgl. Fig. 8), erreicht, wobei eine Begrenzung und Beendigung des Linearhubs 29 nach oben bewirkt wird. Gleichwohl üben die Stellzylinder 25 weiter Kraft über ihre Anlenkstellen 26 aus, woraus in Verbindung mit den Hebelarmen zwischen den Anlenkstellen 26 und den Scharniergelenken bzw. Bolzen 21 ein Drehmoment resultiert. Da der Behälter 3 in daran angelenkten Führungsstangen 19 wegen der Hub-Begrenzung 23, 28 (vgl. Fig. 8), bei der die Oberseite der Führungsstange 23 an die gegenüberliegende Begrenzungskante 28 anschlägt, nicht mehr linear ausweichen kann, führt das Drehmoment bei ausreichender Kraft der Stellzylinder 25 zu einer Behälter-Schwenkbewegung 30.

In Fig. 6 ist die Vollendung dieser Schwenkbewegung 30 gezeigt: Die seitlichen Oberkanten 31 des Behälters 3 verlaufen in derselben schräggeneigten Flucht wie die Hohlschienen 18. Da die perforierte, in der Ausgangsstellung obere Deckwand 32 an der Behälterstirnseite 33 anscharniert ist, ist sie aufgrund ihres Gewichts gemäß Fig. 6 in eine vertikale Stellung aufgeklappt. Dabei kann Sammelgut auf der von der (ehemaligen) Rückwand 22 gebildeten Rampe aus dem Behälter 3 herausgleiten. Das Umschwenken des Behälters 3 um einen Winkel von über 90° wird u. a. dadurch erreicht, daß die Stellzylinder 25 mit ihren Anlenkstellen 26 sehr nahe an den Scharnierbolzen 21, den Führungsstangen 19 und den diese aufnehmenden Hohlschienen 18 angeordnet sind; so läßt sich schon bei relativ kurzen, einstufigen Teleskopzylindern ein derart steiler Kippwinkel für den Behälter 3 erreichen.

Werden die Stellzylinder 25 aus der in Fig. 6 gezeigten Stellung wieder eingefahren, ist zunächst eine Umkehrung der Linearbewegung 29 zu verhindern und ausschließlich für eine Umkehrung der Schwenkbewegung 30 zu sorgen. Dem dient ein Arretiermechanismus 34, der in Fig. 7 - 9 im Detail dargestellt ist: An der Außenwandung der Hohlschiene 18 im Bereich der Längserstreckung des Längsschlitzes 24 ist über einen Gelenkvorsprung 35 ein Hebel 36 angelenkt. Das entgegengesetzte und nach oben ragende Ende des Hebels 36, das sich über den Längsschlitz 24 hinaus erstreckt, ist über eine Bohrung 37 in eine Zugfeder 38 eingehängt. Das entgegengesetzte Ende der Zugfeder 38 ist in die Bohrung 39 eines galgenförmigen Verbindungsglieds 40, das an der Außenwandung der Hohlschiene 18 ortsfest angebracht ist, eingehängt. Die dem Behälter 3 zugewandte Seite des Hebels 36 verläuft stufenartig: Der obere schmalere Teil endet in einer stufenartigen Auflageschulter 41, von deren äußeren Eckkante aus sich eine Gleitrampe 42 nach unten zum Gelenkvorsprung 35 hin erstreckt. Gegenüber der nach außen gerichteten Seite 43 des Hebels 36 divergiert/konvergiert die Gleitrampe 42 und bildet eine schiefe Ebene. Zum Arretiermechanismus gehört ferner ein Stoß- und Lösestift 44, der in einer mit der Synchronisationsstrebe 23 ortsfest verbundenen Hülse 45 verschiebbar gelagert ist. Die Funktion der Synchronisationsstrebe könnte auch ein zusätzlich oder alternativ angeordnetes Querverbindungseisen 72 übernehmen. Im letzteren Fall könnte die Synchronisationsstrebe 23 zu einem vorspringenden Stumpf reduziert sein. Das hintere, dem Behälter 3 zugewandte Ende des Stiftes 44 ist radial zu einem Anschlagkopf 46 erweitert. Zwischen dem Anschlagkopf 46 und der Hülse 44 ist eine Druckfeder 47 angeordnet, welche auf den Stift 44 eine Vorspannung in eine vom Behälter 3 wegführende Richtung erzeugt.

Der Arretiermechanismus 34 funktioniert wie folgt: Die in Fig. 7 gezeigte Stellung entspricht etwa der Behälterstellung gemäß Fig. 3, d. h. die Führungsstange 19 führt zusammen mit der Syhchronisierungsstrebe 23 einen kontinuierlichen Linearhub 29 nach oben aus. Dieser wird mit Anschlag der Oberseite der Strebe 23 an der Begrenzungskante 28 der Hohlschiene 18 bzw. des Längsschlitzes 24 beendet. Dabei ist der Gleitkopf 48 an dem dem Anschlagkopf 46 entgegengesetzten Ende des Stiftes 44 in Berührung mit der Gleitrampe 42 gekommen und danach auf dieser nach oben verschoben worden. Dabei hat der Stoßstift 44 dem Hebel 36 - aufgrund der Divergenz zwischen der Gleitrampe 42 und der entgegengesetzten Außenseite 43 - eine entsprechende Schwenkbewegung entgegen der Kraft der Zugfeder 38 erteilt. Der Hebel 36 kann auch durch die in Funktion befindliche Linearführung selbst nach außen bewegt sein. Geht der Linearhub 29 in die weiter oben erläuterte Schwenkbewegung 30 des Behälters 3 über, drückt dieser nicht mehr auf den Anschlagkopf 46 des Stoß-Stiftes 44. Infolgedessen kann die Druckfeder 47, die zwischen der Hülse 45 und dem Anschlagkopf 46 eingeklemmt ist, den Stift 44 samt Gleitkopf 48 von der Gleitrampe 42 zurückziehen, und die Zugfeder 48 die Verschwenkung des Hebels 36 zumindest teilweise rückgängig machen. Dabei gerät die Auflageschulter 41 in eine Stellung unterhalb der Synchronisationsstrebe 23, so daß diese mit ihrer Unterseite darauf aufliegen kann. Dann ist (zunächst) trotz Einfahren der in Fig. 3 - 6 gezeigten Stellzylinder 25 eine Umkehrung des Linearhubs 29 durch die Auflageschulter 41 verhindert, weil die mit den Führungsstangen 19 fest verbundene Synchronisationsstrebe 23 daran anschlägt, und der Behälter 3 aufgrund des Scharnierbolzens 21 gegenüber der Führungsstange 19 linear unbeweglich ist. Die Rückschwenkbewegung 49 des Behälters 3 führt zu dessen Auftreffen auf den Anschlagkopf 46 des Stoß- und Lösestiftes 44, so daß dieser durch die Hülse 45 gegen die Gleitrampe 42 des Hebels 36 gestoßen wird. Dabei wird der Hebel 36 entgegen der Kraft der Zugfeder 38 erneut nach außen gekippt, so daß die Auflageschulter 41 außer Anlage mit der Unterseite der Synchronisationsstrebe 23 gerät. Nun kann die Rückschwenkbewegung 49 in eine Senkbewegung, umgekehrt zum Linearhub 29, übergehen (vgl. Fig. 9), wobei wieder die in Fig. 7 gezeigte Stellung durchlaufen wird.

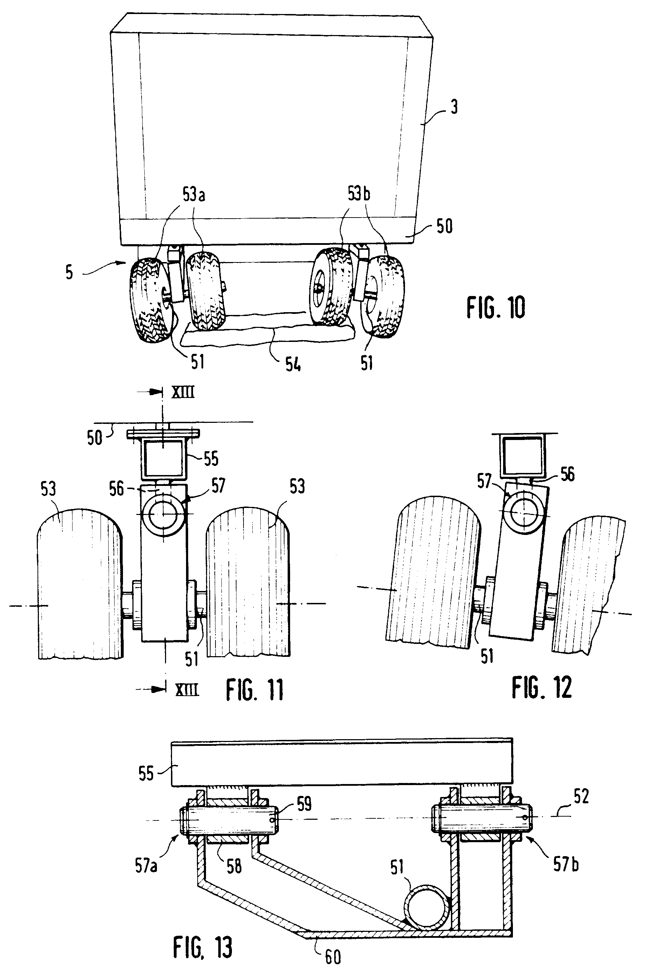

Gemäß Fig. 10 sind am Chassis- bzw. Rahmen 50 des Fahrwerks 5 zwei voneinander getrennte Radachsen 51 pendelnd um eine zur Bodenaufstandsfläche parallelen Achse 52 (vgl. Fig. 13) aufgehängt. Jeder Endstummel der beiden Radachsen 51 ist mit einem Rad versehen, d. h. die Radachsen 51 sind doppelbereift. Die damit erzielbare Wirkung ist in Fig. 10 veranschaulicht: Beide doppelbereiften Radachsen 51 verlaufen nicht parallel, sondern schräg geneigt zur Bodenaufstandsfläche, weil von den beiden Radsätzen 53a, 53b je ein Reifen - in Fig. 10 die einander innen gegenüberliegenden Reifen - ein eine Unebenheit verursachendes Hindernis 54 überfährt, so daß die jeweiligen Außenreifen der Radsätze 53a, 53b tiefer liegen.

Die Konstruktion dieser Radaufhängung ist in Fig. 11 - 13 verdeutlicht: Am Fahrwerksrahmen 50 sind längliche Hohlprofileisen 55 ortsfest angebracht, die an ihrer Unterseite über einen Ansatz 56 Scharniergelenke 57 tragen. Die Scharniergelenke weisen, wie insbesondere aus Fig. 13 ersichtlich, in Führungshülsen 58 drehbar gelagerte Zapfen 59 auf.

Gemäß Fig. 13 sind zwei solcher Scharniergelenke 57a, 57b hintereinander in der gemeinsamen Flucht der Schwenkachse 52 liegend angeordnet und durch einen gemeinsamen etwa galgenförmigen Tragbügel 60 mit Hohlprofil verbunden. Dessen beide Enden sind mit je einem Bolzen bzw. Zapfen 59 drehfest verbunden, so daß der Bügel 60 nebst darauf getragener Radachse 51 um die Schwenkachse 52 pendeln kann, wie in Fig. 10 und 12 verdeutlicht. Fig. 11 zeigt die normale, nicht durch ein Hindernis 54 ausgelenkte Stellung der Radachse 51.

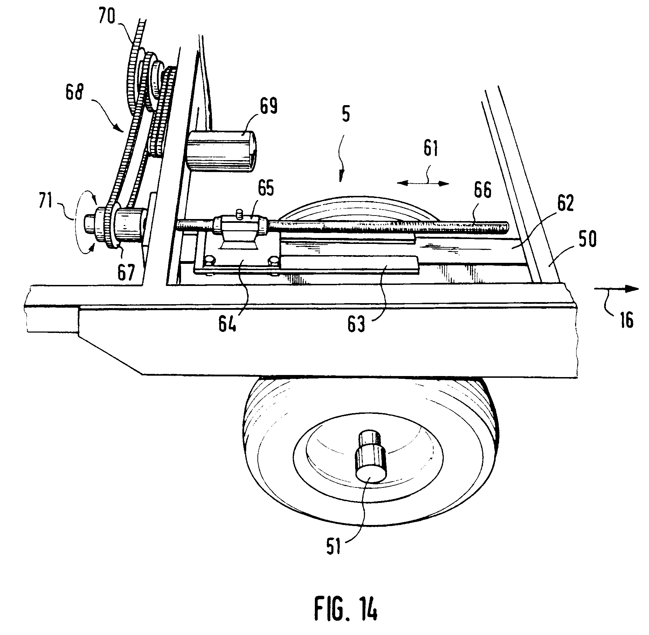

Gemäß Fig. 14 ist die zuvor erläuterte Bodenbearbeitungsmaschine 2 mit einem Fahrwerk 5 ausgestattet, an dessen Rahmen 50 die doppelbereifte Radachse 51 derart aufgehängt, daß ihr eine in Fahrtrichtung 16 verlaufende Linear-Hin- u. Herbewegung 61 erteilt werden kann. Zu diesem Zweck ist in dem Fahrwerksrahmen 50 eine entsprechend verlaufende Führungsschiene 62 baulich integriert, die von einem darauf gleitend beweglichen Verschieberahmen 63 umfaßt ist. In diesem ist die Radachse 51 aufgehängt, was beispielsweise mittels der in Fig. 10 - 13 gezeigten Radaufhängung mit dem Hohlprofileisen 55 als Verbindung zum Verschieberahmen 63 erfolgen kann. Der Verschieberahmen 63 besitzt eine Tragplatte 64, auf dessen Oberseite eine Spindelmutter 65 sitzt. Mit deren Innengewinde steht das Außengewinde einer parallel zur Führungsschiene 62 verlaufenden Spindelschraube oder -welle 66 in Eingriff. An ihrem einen Ende ist ein Kettenrad 67 drehfest angeordnet, das von einem Kettentrieb 68 in Drehung versetzbar ist. Der Kettentrieb dient zur Übertragung eines Drehmoments, das von einem schematisch angedeuteten Elektromotor 69 erzeugt wird. Durch die Übertragung wird dem Kettenrad 67 und der Spindelwelle 66 eine Drehung 71 erteilt, die in die Linearbewegung 61 für den Verschieberahmen 63 und die Radachse 51 umgesetzt wird. In Fig. 14 ist nur ein Teil des Fahrwerks 5 und ein Teil des Kettentriebs 68 (symmetrisch hälftig) gezeichnet. Über die abgebrochen gezeichnete Kette 70 läßt sich ein dem gezeichneten Kettenrad 67 entsprechendes Kettenrad eines gleichartigen Spindeltriebs zur gleichartigen Linearverschiebung einer separaten Radachse antreiben. Dabei dient der Kettentrieb als Synchronisationseinrichtung für die Linearverschiebung von zwei Radachsen, so daß diese um die gleiche Strecke mit gleicher Geschwindigkeit hin- und herverschiebbar sind.

Es liegt jedoch auch im Rahmen der Erfindung, separaten Radachsen, die seitlich nebeneinander oder in Fahrtrichtung hintereinander liegen, jeweils eine gesonderte Antriebseinrichtung zuzuordnen, damit sie je nach unterschiedlichen Anforderungen und Umgebungsbedingungen unabhängig voneinander in Fahrtrichtung verschoben werden können.

Gemäß Fig. 15 ist das Bodenbearbeitungsaggregat mit dem Fahrwerkrahmen 50 über eine Parallelogrammführung 73 beweglich geführt verbunden. Diese weist ein Traggestell 74 auf, das mit dem Fahrwerksrahmen 50 ortsfest verbunden ist und sich nach oben längs einer Schrägen gegenüber der Vertikalen erstreckt. Am oberen und unteren Ende des Traggestells 74 sind ein unterer Schwenkarm 75 und ein oberer Schwenkarm 76 angelenkt. Deren vom Traggestell entferntere Enden sind am Bodenbearbeitungsaggregat 4 bzw. dessen Gehäuseabdeckung ebenfalls angelenkt. In der in Fig. 15 gezeigten, nicht hochgehobenen Ausgangsstellung des Aggregats 4 verlaufen die Schwenkarme 75, 76 etwa parallel zueinander. Auf der anderen, in der Zeichnung nicht sichtbaren Seite ist die gleiche parallelogrammartige Konstruktion ausgeführt. Ferner ist das Aggregat 4 bzw. dessen Gehäuse über ein vorspringendes Verbindungseisen 77 mit einem durch Schrauben höhenverstellbares Tastrad 78 verbunden, das auf dem Boden 79 abrollt. Durch diese Anordnung ist das Aggregat 4 über das Tastrad 78 gegen den Boden 79 rollbar abgestützt.

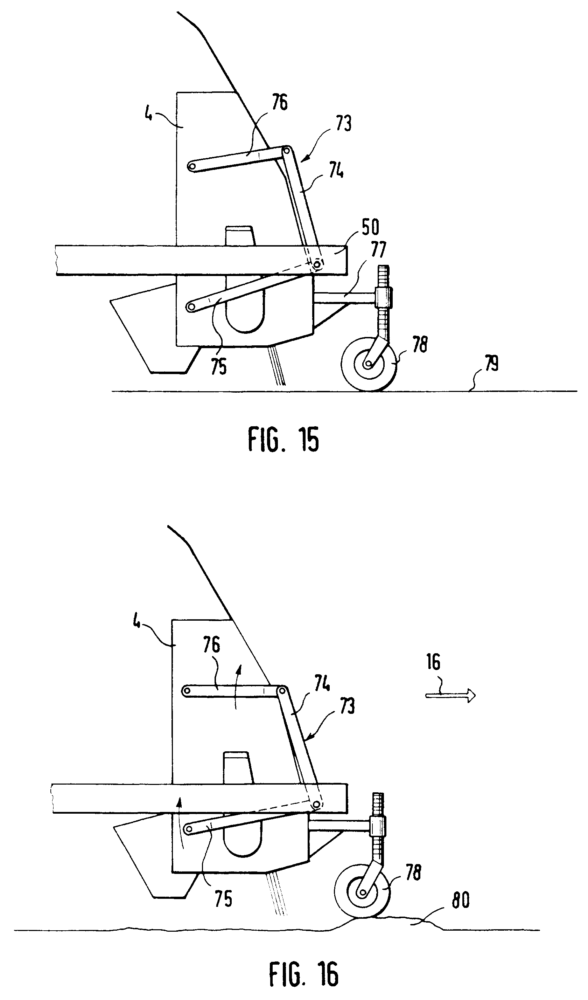

Die Funktionsweise wird weiter anhand von Fig. 16 deutlich: Wird die Bodenbearbeitungsmaschine mit zugehörigem Aggregat 4 in Fahrtrichtung 16 bewegt, kann es vorkommen, daß sich ein Bodenhindernis 80, das das Aggregat beschädigen könnte, in den Weg stellt. Dieses wird jedoch durch das dem Aggregat 4 in Fahrtrichtung 16 vorangestellte Tastrad 78 erfaßt. Durch die ortsfeste Verbindung des Tastrades 78 mit dem Kehraggregat 4 und dessen nach oben beweglicher Aufhängung in der Parallelogrammführung 73 ist jedoch dafür gesorgt, daß das Aggregat 4 über die Schwenkarme 75, 76 in seiner Höhe nach oben verstellt wird und so daß das Bodenhindernis 80 nicht schädigend einwirken kann. Das Zusammenwirken von Tastrad 78 und Parallelogrammführung 73 sorgt also stets für einen etwa konstanten Abstand zwischen dem zu bearbeitenden Boden 79, 80 und der Unterseite des Bodenbearbeitungsaggregats 4.

## Patentansprüche

1. Kehrmaschine (2), insbesondere zur Rasenpflege, mit einem Behälter (3), in den von einem Boden-Bearbeitungsaggregat (4) mittels einer oder mehrerer Bürstenwalzen (7) durch einen im unteren Bereich des Behälters angeordneten Einlaß Sammelgut, beispielsweise Kehrgut, befördert wird, dadurch gekennzeichnet, daß der Behälter eine im oberen Bereich angeordnete perforierte Wand (32) aufweist und mit einem von dieser Wand (32) umgebenen Ausweichraum (13) ausgebildet ist, der mittels einer stutzenartig in den Behälter (3) ragenden Strömungsleitwand (10) des Behälter-Einlasses oder Bearbeitungsaggregats (4) umwandet und dabei von Sammelgut weitgehend freigehalten ist, im vorderen Bereich von einer Gehäuse-Stirnwand (17) zum Fernhalten von Staub gegenüber dem Fahrerhaus eines Zugfahrzeugs (1) umgeben ist sowie an den Bereich des Behälter-Einlasses zur Aufnahme von Luftwirbel (12) angrenzt, die vom Sammelgut-Förderstrom (9) ausgelöst sind, wobei die Strömungsleitwand (10) des Ausweichraums (13) das Bearbeitungsaggregat (4) seitlich und/oder von oben umgibt.

2. Kehrmaschine nach Anspruch 1, dadurch gekennzeichnet, daß der Ausweichraum (13) oberhalb des Behälter-Einlasses (11) und/oder des Förderausgangs (10) des Bearbeitungsaggregats angeordnet ist.

3. Kehrmaschine nach Anspruch 1 oder 2, dadurch gekennzeichnet, daß die Umwandung (14)des Ausweichraumes (13) und die Behälterwandung baulich integriert sind.

4. Kehrmaschine nach einem der vorangehenden Ansprüche, dadurch gekennzeichnet, daß die Umwandung (14) des Ausweichraumes (13) ein eckiges Profil aufweist.

5. Kehrmaschine nach einem der vorangehenden Ansprüche, mit einer Vorrichtung zum Entleeren eines Behälters (3), die mit einem Gestell (18, 19, 23) und einer Stellantriebseinrichtung (25, 26) zum Heben und Schwenken des Behälters (3) versehen ist, dadurch gekennzeichnet, daß das Gestell (18, 19, 23) eine oder mehrere Linearführungen (18) - vorzugsweise mit Hub-Begrenzungselementen (28) - aufweist, mit denen Führungsteile (19) - gegebenenfalls bis zur Wirkung des jeweiligen Begrenzungselements (28) - ausfahrbar (29) in Eingriff stehen und jeweils über eine Gelenkstelle (20, 21) mit dem Behälter (3) zu dessen Verschwenken verbunden sind.

6. Kehrmaschine nach Anspruch 5, dadurch gekennzeichnet, daß ein Stellantriebsorgan (25) - vorzugsweise gegen das Gestell (18, 19, 23) abgestützt - am Behälter (3) angreift, und zwar vorzugsweise in einer solchen Nähe zur Gelenkstelle (20,21), daß die zum Hochschwenken (30) des Behälters (3) notwendige Stellantriebskraft die zu dessen linearen Hochverschieben (29) notwendige Stellantriebskraft übersteigt.

7. Kehrmaschine nach Anspruch 5 oder 6, dadurch gekennzeichnet, daß Führungsteile (19) unterschiedlicher Linearführungen (18) zur Bewegungssynchronisation miteinander verbunden sind.

8. Kehrmaschine nach Anspruch 5, 6 oder 7, dadurch gekennzeichnet, daß die Linearführung als Hohlschiene (18) ausgeführt ist, in der als Führungsteil eine Stange (19) längsverschiebbar (29) und teleskopartig ausfahrbar aufgenommen ist.

9. Kehrmaschine nach Anspruch 7 und 8, gekennzeichnet durch gegenüberliegende Längsschlitze (24) unterschiedlicher Hohlschienen (18), die von einer Strebe (23) durchsetzt sind, die Führungs-Stangen (19) der unterschiedlichen Hohlschienen (18) verbindet.

10. Kehrmaschine nach einem der Ansprüche 5 bis 9, gekennzeichnet durch einen Winkel zwischen der Boden-Aufstandsfläche und der Linearführung (18,19) von weniger als 90 Grad.

11. Kehrmaschine nach einem der Ansprüche 5 bis 10, gekennzeichnet durch Teleskopzylinder als Antriebsorgane.

12. Kehrmaschine nach einem der Ansprüche 5 bis 11, gekennzeichnet durch eine Arretiereinrichtung (34) zum Feststellen des Behälters (3) gegenüber der oder den Linearführungen (18, 19,) bei oder nach Wirksamwerden des oder der Hub-Begrenzungselemente (28).

13. Kehrmaschine nach Anspruch 12, dadurch gekennzeichnet, daß die Arretiereinrichtung (34) aufgrund einer Behälter-Schwenk-, insbesondere Rückschwenkbewegung (30, 49) lösbar ausgebildet ist.

14. Kehrmaschine nach Anspruch 13, dadurch gekennzeichnet, daß die Arretiereinrichtung (34) eine am Gestell (18, 19, 23) stationär angeordnete Raste (36, 38, 41) und ein mit den Bewegungen (29) des Führungselements (19) gekoppeltes und/oder von einer Behälter-Linear/Schwenkbewegung (29, 30, 49) betätigbares Ein/Ausrastorgan (44, 47) aufweist.

15. Kehrmaschine nach Anspruch 14, dadurch gekennzeichnet, daß die Raste (36, 38, 41) als am Gestell (18, 19, 23) angelenkter und gegen Federdruck (38) durch das Ein/Ausrastorgan (44, 47) auslenkbarer Hebel (36) mit Auflagefläche (41) für ein Führungselement (19) und/oder eine etwaige Verbindungsstrebe (23), und das Ein/Ausrastorgan (44, 47) als durch eine Behälter-Schwenkbewegung (49) betätigbarer Gleit- und Stoß-Bolzen oder -stift (44) zum Auslenken des Hebels (36) ausgeführt sind.

16. Kehrmaschine nach Anspruch 14 oder 15, gekennzeichnet durch eine Aussparung und/oder Gleitrampe (42) in beziehungsweise auf der Raste (36, 38, 41) zum Einrücken beziehungsweise Gleiten des Ein/Ausrastorgans (44, 47).

17. Kehrmaschine nach einem der Ansprüche 14 bis 16, gekennzeichnet durch ein federgepuffertes (47) Ein/Ausrastorgan.

18. Kehrmaschine nach einem der Ansprüche 5 bis 17, jeweils mit Anspruch 8, gekennzeichnet durch eine Aussparung (24) in der Hohlschiene (18), deren Begrenzungskante (28) als Hub-Begrenzungselement einen Anschlag für einen Vorsprung (23) der Führungs-Stange (19) bildet.

19. Kehrmaschine nach einem der vorangehenden Ansprüche, gekennzeichnet durch ein Fahrwerk (5) mit einer oder mehreren jeweils um eine zur Bodenaufstandsfläche parallelen Schwenkachse (52) pendelnden, wippenden und/oder schaukelnden Radachsen (51), vorzugsweise mit beidseits angebrachten Rädern (53).

20. Kehrmaschine nach Anspruch 19, gekennzeichnet durch eine Mehrzahl voneinander unabhängig pendelnden, wippenden und/oder schaukelnden Radachsen (51).

21. Kehrmaschine nach Anspruch 19 oder 20, mit einer Vorrichtung zur Radaufhängung, die durch eine oder mehrere in Fahrtrichtung verlaufende Scharniergelenke (57) zur schwenkbaren Anbringung von querverlaufenden Radachsen (51) an einen Rahmen (50) des Fahrwerks (5) gekennzeichnet ist.

22. Kehrmaschine nach Anspruch 21, gekennzeichnet durch zwei oder mehr in ihren Längsrichtungen (52) hintereinander fluchtende Scharniergelenke (57), denen eine Radachse (51) gemeinsam zugeordnet ist.

23. Kehrmaschine nach Anspruch 22, dadurch gekennzeichnet, daß die fluchtenden Scharniergelenke (57) über einen schwenkbar angebrachten Tragbügel (60) verbunmden sind, der eine Radachse (51) trägt.

24. Kehrmaschine nach einem der Ansprüche 21 bis 23, dadurch gekennzeichnet, daß ein oder mehrere Scharniergelenke (51) gemeinsam über ein vorzugsweise hohles Profilstück (55) am Fahrwerkrahmen (50) befestigt sind.

25. Kehrmaschine nach einem der vorangehenden Ansprüche, mit einem Fahrwerk (5), das wenigstens eine Radachse (51) aufweist, dadurch gekennzeichnet, daß die Radachse (51) parallel zur Fahrtrichtung (16) mittels eines manuell ansteuer- und/oder betätigbaren Stell-Antriebsorgans (68, 69) linear verschiebbar (61) gelagert ist.

26. Kehrmaschine nach Anspruch 25, gekennzeichnet durch eine Mehrzahl getrennter Radachsen (51), die mit einem gemeinsamen Stell-Antriebsorgan (69) in Wirkungsverbindung stehen.

27. Kehrmaschine nach Anspruch 26, dadurch gekennzeichnet, daß die getrennten Radachsen (51) über eine Synchronisiereinrichtung, beispielsweise Querstrebe, Synchrongetriebe oder Kettentrieb (68), mit dem Antriebsorgan, beispielsweise hydraulischer oder pneumatischer Stellzylinder, manueller Kurbeltrieb oder batteriegetriebener Elektromotor (69), verbunden sind.

28. Kehrmaschine nach Anspruch 25, 26 oder 27, dadurch gekennzeichnet, daß einer oder mehreren, insbesondere getrennten, Radachsen eine in Fahrtrichtung (16) verlaufende Führungsschiene (62) zugeordnet ist.

29. Kehrmaschine nach Anspruch 28, gekennzeichnet durch einen längs der Führungsschiene (62) beweglichen Verschieberahmen (63), an dem zu seiner Verstellung (61) das Antriebsorgan (69) angreift und die Radachse (51) aufgehangen ist.

30. Kehrmaschine nach Anspruch 29, gekennzeichnet durch einen Spindeltrieb (65,66) mit einer auf dem Verschieberahmen (63) befestigten Spindelmutter (65) und mit einer mit deren Innengewinde kämmenden Spindelwelle (66), die vom Antriebsorgan (69) rotiert wird.

31. Kehrmaschine nach Anspruch 28, 29 oder 30, gekennzeichnet durch eine gehäuseartige Abdeckung für die Führungsschiene und/oder Spindelwelle.

32. Kehrmaschine nach einem der vorangehenden Ansprüche, mit einem Fahrwerk (5), gekennzeichnet durch ein Bodenbearbeitungsaggregat (4), das über ein vorangestelltes Boden-Tastrad (8) gegen dessen Bodenaufstandsfläche (79, 80) abstützbar und über eine an einem Chassis oder Rahmen (50) des Fahrwerks (5) angelenkte Parallelogrammführung (73) bewegbar, insbesondere nach oben aushebbar, geführt ist.

33. Kehrmaschine nach Anspruch 32, dadurch gekennzeichnet, daß das Tastrad (78) mit dem Bodenbearbeitungsaggregat (4) oder dessen Gehäuse ortsfest (77) verbunden ist.

34. Kehrmaschine nach Anspruch 32 oder 33, dadurch gekennzeichnet, daß das Bodenbearbeitungsaggregat (4) in der Parallelogrammführung (73) an vier Punkten und/oder lose oder lösbar aufgeknüpft oder aufgehängt ist.

## Claims

1. Sweeping machine (2), in particular for lawn care, having a container (3) into which an horticultural implement (4) by means of one or more revolving brushes (7) feeds collected material, e.g. sweepings, through an inlet disposed in the bottom region of the container, characterized in that the container has a perforated wall (32) disposed in the top region and is constructed with a bypass chamber (13), which is surrounded by said wall (32) and is enclosed by a flow-directing wall (10) of the container inlet or implement (4) projecting in the manner of a connection piece into the container (3) and is thereby kept substantially free of collected material, in the front region is surrounded by a housing front wall (17) for keeping dust away from the driver's cab of a tractor vehicle (1) and lies adjacent to the region of the container inlet for receiving an air vortex (12) produced by the conveyed flow (9) of collected material, the flow-directing wall (10) of the bypass chamber (13) surrounding the implement (4) laterally and/or from above.

2. Sweeping machine according to claim 1, characterized in that the bypass chamber (13) is disposed above the container inlet (11) and/or the feed outlet (10) of the implement.

3. Sweeping machine according to claim 1 or 2, characterized in that the enclosing wall (14) of the bypass chamber (13) and the container wall are structurally integrated.

4. Sweeping machine according to one of the preceding claims, characterized in that the enclosing wall (14) of the bypass chamber (13) has an angular profile.

5. Sweeping machine according to one of the preceding claims, having a device for emptying a container (3), which device is provided with a frame (18, 19, 23) and an actuating drive device (25, 26) for lifting and swivelling the container (3), characterized in that the frame (18, 19, 23) comprises one or more linear guides (18) - preferably with lift-limiting elements (28) - with which guide parts (19) are engaged so as to be in each case extendable (29) - possibly up to operation of the lift-limiting element (28) - and are connected in each cafe via a hinge point (20, 21) to the container (3) for swivelling of said container.

6. Sweeping machine according to claim 5, characterized in that an actuating drive member (25) - preferably supported against the frame (18, 19, 23) - acts upon the container (3) and does so preferably so near to the hinge point (20, 21) that the actuating drive force required for upward swivelling (30) of the container (3) exceeds the actuating drive force required for linear upward displacement (29) of said container.

7. Sweeping machine according to claim 5 or 6, characterized in that guide parts (19) of different linear guides (18) are connected to one another for synchronized movement.

8. Sweeping machine according to claim 5, 6 or 7, characterized in that the linear guide takes the form of a hollow rail (18) in which, as a guide part, a rod (19) is received in longitudinally displaceable (29) and telescopically extendable manner.

9. Sweeping machine according to claim 7 and 8, characterized by opposing longitudinal slots (24) of different hollow rails (18), which are penetrated by a strut (23) which connects guide rods (19) of the different hollow rails (18).

10. Sweeping machine according to one of claims 5 to 9, characterized by an angle between the ground contact surface and the linear guide (18, 19) of less than 90°.

11. Sweeping machine according to one of claims 5 to 10, characterized by telescopic cylinders as drive members.

12. Sweeping machine according to one of claims 5 to 11, characterized by an arresting device (34) for locking the container (3) relative to the linear guide or guides (18, 19) when or after the lift-limiting element or elements (28) become effective.

13. Sweeping machine according to claim 12, characterized in that the arresting device (34) is designed so as to be releasable on the basis of a container swivelling motion, in particular a return swivelling motion (30, 49).

14. Sweeping machine according to claim 13, characterized in that the arresting device (34) comprises a catch (36, 38, 41) disposed in a stationary manner on the frame (18, 19, 23) and a snap-in/snap-out member (44, 47) coupled to the motions (29) of the guide element (19) and/or operable by a container linear/swivelling motion (29, 30, 49).

15. Sweeping machine according to claim 14, characterized in that the catch (36, 38, 41) takes the form of a lever (36), which is coupled to the frame (18, 19, 23), is deflectable against spring pressure (38) by the snap-in/snap-out member (44, 47) and has a supporting surface (41) for a guide element (19) and/or a possible connecting strut (23), and the snap-in/snap-out member (44, 47) takes the form of a slide-and-push bolt or pin (44), which is operable by a container swivelling motion (49), for deflection of the lever (36).

16. Sweeping machine according to claim 14 or 15, characterized by a recess and/or sliding ramp (42) in and/or on the catch (36, 38, 41) for engagement and/or sliding of the snap-in/snap-out member (44, 47).

17. Sweeping machine according to one of claims 14 to 16, characterized by a spring-buffered (47) snap-in/snap-out member.

18. Sweeping machine according to one of claims 5 to 17, in each case with claim 8, characterized by a recess (24) in the hollow rail (18), whose boundary edge (28) as a lift-limiting element forms a stop for a projection (23) of the guide rod (19).

19. Sweeping machine according to one of the preceding claims, characterized by an undercarriage (5) having one or more wheel axles (51), which swing, seesaw and/or rock in each case about a swivelling axis (52) parallel to the ground contact surface and preferably have wheels (53) mounted one either end.

20. Sweeping machine according to claim 19, characterized by a plurality of wheel axles (51) which swing, seesaw and/or rock independently of one another.

21. Sweeping machine according to claim 19 or 20, having a wheel suspension device which is characterized by one or more hinge joints (57) extending in the direction of travel for swing-mounting transversely extending wheel axles (51) onto a frame (50) of the undercarriage (5).

22. Sweeping machine according to claim 21, characterized by two or more hinge joints (57), which in their longitudinal directions (52) are aligned one behind the other and with which a wheel axle (51) is jointly associated.

23. Sweeping machine according to claim 22, characterized in that the aligned hinge joints (57) are connected by a swing-mounted supporting bracket (60) which carries a wheel axle (51).

24. Sweeping machine according to one of claims 21 to 23, characterized in that one or more hinge joints (51) are fastened jointly by a preferably hollow sectional piece (55) to the undercarriage frame (50).

25. Sweeping machine according to one of the preceding claims, having an undercarriage (5) comprising at least one wheel axle (51), characterized in that the wheel axle (51) is supported so as to be linearly displaceable (61) parallel to the direction of travel (16) by means of a manually controllable and/or operable actuating drive member (68, 69).

26. Sweeping machine according to claim 25, characterized by a plurality of separate wheel axles (51), which are operationally connected to a common actuating drive member (69).

27. Sweeping machine according to claim 26, characterized in that the separate wheel axles (51) are connected by a synchronizing device, e.g. a cross-strut, synchromesh gear or chain drive (68), to the drive member, e.g. a hydraulic or pneumatic actuating cylinder, manual crank mechanism or battery-operated electric motor (69).

28. Sweeping machine according to claim 25, 26 or 27, characterized in that a guide rail (62) extending in the direction of travel (16) is associated with one or more, in particular separate, wheel axles.

29. Sweeping machine according to claim 28, characterized by a sliding frame (63) which is movable along the guide rail (62) and is acted upon for its displacement (61) by the drive member (69) and from which the wheel axle (51) is suspended.

30. Sweeping machine according to claim 29, characterized by a spindle drive (65, 66), having a spindle nut (65) fastened to the sliding frame (63) and having a spindle shaft (66), which meshes with the internal thread of the spindle nut and is rotated by the drive member (69).

31. Sweeping machine according to claim 28, 29 or 30, characterized by a housing-like cover for the guide rail and/or spindle shaft.

32. Sweeping machine according to one of the preceding claims, having an undercarriage (5), characterized by a horticultural implement (4) which, by means of a ground-sensing wheel (8) placed in front, is supportable against its ground contact surface (79, 80) and, by means of a parallelogram guide (73) coupled to a chassis or frame (50) of the undercarriage (5), is guided so as to be capable of moving, in particular of lifting out in an upward direction.

33. Sweeping machine according to claim 32, characterized in that the sensing wheel (78) is connected in a fixed manner (77) to the horticultural implement (4) or the housing of said implement.

34. Sweeping machine according to claim 32 or 33, characterized in that the horticultural implement (4) is hung or suspended at four points and/or loosely or detachably in the parallelogram guide (73).

## Revendications

1. Machine de balayage (2), en particulier pour l'entretien des pelouses, comprenant un récipient (3) dans lequel est refoulé, au travers d'une entrée disposée dans la partie inférieure du récipient, par une unité de traitement du sol (4), au moyen d'une ou de plusieurs brosses cylindriques (7), le produit ramassé, par exemple le produit de balayage, caractérisée en ce que le récipient présente une paroi perforée (32) disposée dans la partie supérieure, et est d'une configuration comprenant une chambre d'évitement (13), qui est entourée par cette paroi (32), qui est enveloppée au moyen d'une paroi de guidage d'écoulement (10) de l'entrée du récipient ou de l'unité de traitement (4), faisant saillie à la manière d'un embout de tubulure, dans le récipient (3), en étant ainsi, dans une large mesure, maintenue à l'écart du produit ramassé, qui est entourée, dans la partie avant, d'une paroi frontale de carter (17) destinée à préserver des poussières la cabine de conduite d'un véhicule tracteur (1), et qui est contiguë à la zone de l'entrée du récipient pour capter des tourbillons d'air (12) provoqués par le courant de transport (9) du produit ramassé, la paroi de guidage d'écoulement (10) de la chambre d'évitement (13) entourant latéralement et/ou par le haut, l'unité de traitement (4).

2. Machine de balayage selon la revendication 1, caractérisée en ce que la chambre d'évitement (13) est disposée au-dessus de l'entrée (11) du réservoir et/ou de la sortie de refoulement (10) de l'unité de traitement.

3. Machine de balayage selon la revendication 1 ou 2, caractérisée en ce que la paroi d'enveloppe (14) de la chambre d'évitement (13) et la paroi du récipient sont intégrées sur le plan de la construction.

4. Machine de balayage selon l'une des revendications précédentes, caractérisée en ce que la paroi d'enveloppe (14) de la chambre d'évitement (13) présente un profil anguleux.

5. Machine de balayage selon l'une des revendications précédentes, comprenant un dispositif pour vider un récipient (3), qui est pourvu d'un bâti (18, 19, 23) et d'un mécanisme d'actionnement (25, 26) pour le soulèvement et le pivotement du récipient (3), caractérisée en ce que le bâti (18, 19, 23) présente un ou plusieurs guides linéaires (18), qui comportent de préférence des éléments de limitation de course (28), et avec lesquels sont en prise de manière extractible (29), le cas échéant jusqu'à l'action de l'élément de limitation respectif (28), des pièces de guidage (19), reliées chacune, par l'intermédiaire d'un point d'articulation (20, 21), au récipient (3), pour sol, pivotement.

6. Machine de balayage selon la revendication 5, caractérisée en ce qu'un organe d'actionnement (25), s'appuyant de préférence sur le bâti (18, 19, 23), agit sur le récipient (3), ceci de préférence dans une proximité telle du point d'articulation (20, 21), que la force d'actionnement nécessaire au pivotement vers le haut (30) du récipient (3), surmonte la force d'actionnement nécessaire à sa translation linéaire vers le haut (29).

7. Machine de balayage selon la revendication 5 ou 6, caractérisée en ce que des pièces de guidage (19) de guides linéaires (18) différents, sont reliées les unes aux autres pour la synchronisation des mouvements.

8. Machine de balayage selon la revendication 5, 6 ou 7, caractérisée en ce que le guide linéaire est réalisé sous forme d'une glissière creuse (18) dans laquelle, une tige (19) est reçue, déplaçable longitudinalement (29), et déployable de façon télescopique, en guise de pièce de guidage.

9. Machine de balayage selon la revendication 7 et 8, caractérisée par des fentes longitudinales (24), opposées, de glissières creuses différentes (18), qui sont traversées par une contre-fiche (23), qui relie des tiges de guidage (19) des glissières creuses différentes (18).

10. Machine de balayage selon l'une des revendications 5 à 9, caractérisée par un angle entre la surface d'appui au sol et le guide linéaire (18, 19), de moins de 90 degrés.

11. Machine de balayage selon l'une des revendications 5 à 10, caractérisée par des vérins télescopiques en guise d'organes d'actionnement.

12. Machine de balayage selon l'une des revendications 5 à 11, caractérisée par un dispositif d'arrêt (34) pour immobiliser le récipient (3) par rapport au ou aux guides linéaires (18, 19), lors de ou après l'intervention du ou des éléments de limitation de course (28).

13. Machine de balayage selon la revendication 12, caractérisée en ce que le dispositif d'arrêt (34) est conçu libérable sous l'effet d'un mouvement de pivotement, de préférence de pivotement vers l'arrière (30, 49), du récipient.

14. Machine de balayage selon la revendication 13, caractérisée en ce que le dispositif d'arrêt (34) comporte un organe à cran d'arrêt (36, 38, 41) en position fixe sur le bâti (18, 19, 23), et un organe d'encliquetage/décliquetage (44, 47) couplé aux mouvements (29) de l'élément de guidage (19) et/ou susceptible d'être actionné par un mouvement linéaire/de pivotement (29, 30, 49) du récipient.

15. Machine de balayage selon la revendication 14, caractérisée en ce que l'organe à cran d'arrêt (36, 38, 41) est réalisé sous forme d'un levier (36), qui comporte une surface d'application (41) pour un élément de guidage (19) et/ou une éventuelle traverse de liaison (23), et qui est articulé sur le bâti (18, 19, 23) et est susceptible d'être dévié a l'encontre de la poussée d'un ressort (38), par l'organe d'encliquetage/décliquetage (44, 47), et l'organe d'encliquetage/décliquetage (44, 47) est réalisé sous forme d'une broche ou goupille de glissement et de poussée (44) pouvant être actionnée par un mouvement de pivotement (49) du récipient, pour produire la déviation du levier (36).

16. Machine de balayage selon la revendication 14 ou 15, caractérisée par un évidement et/ou une rampe de glissement (42) dans, respectivement sur, l'organe à cran d'arrêt (36, 38, 41), et destinés à l'enclenchement, respectivement au glissement, de l'organe d'encliquetage/décliquetage (44, 47).

17. Machine de balayage selon l'une des revendications 14 à 16, caractérisée par un organe d'encliquetage/décliquetage amorti par ressort (47).

18. Machine de balayage selon l'une des revendications 5 à 17, chacune en combinaison avec la revendication 8, caractérisée par un évidement (24) dans la glissière creuse (18), dont le bord de limitation (28), en tant qu'élément de limitation de course, forme une butée pour une protubérance (23) de la tige de guidage (19).

19. Machine de balayage selon l'une des revendications précédentes, caractérisée par un train de roulement (5) comprenant un ou plusieurs essieux de roues (51), sur lesquels sont de préférence montées des roues (53) des deux côtés, et qui peuvent chacun osciller, basculer et/ou se balancer autour d'un axe de pivotement (52) parallèle a la surface d'appui su sol.

20. Machine de balayage selon la revendication 19, caractérisée par plusieurs essieux de roues (51) pouvant osciller, basculer et/ou se balancer indépendamment les uns des autres.

21. Machine de balayage selon la revendication 19 ou 20, comportant un dispositif de suspension de roues, qui est caractérisé par une ou plusieurs articulations à charnière (57) s'étendant dans la direction de marche, et destinées au montage pivotant d'essieux de roues (51) s'étendant transversalement, sur un châssis (50) du train de roulement (5).

22. Machine de balayage selon la revendication 21, caractérisée par deux articulations à charnière (57) ou plus, alignées l'une derrière l'autre dans leurs directions longitudinales (52), et auxquelles est associé, en commun, un essieu de roues (51).

23. Machine de balayage selon la revendication 22, caractérisée en ce que les articulations à charnière (57) alignées, sont reliées par l'intermédiaire d'un étrier de support (60) monté de manière pivotante et portant un essieu de roues (51).

24. Machine de balayage selon l'une des revendications 21 à 23, caractérisée en ce qu'une ou plusieurs articulations à charnière (57) sont fixées en commun sur le châssis (50) du train de roulement, par l'intermédiaire d'un tronçon de profilé (55), de préférence creux.

25. Machine de balayage selon l'une des revendications précédentes, comportant un train de roulement (5) qui présente au moins un essieu de roues (51), caractérisée en ce que l'essieu de roues (51) est monté déplaçable linéairement (61), parallèlement à la direction de marche (16), au moyen d'un organe d'entraînement (68, 69) pouvant être commandé et/ou actionné manuellement.

26. Machine de balayage selon la revendication 25, caractérisée par plusieurs essieux de roues (51) séparés, qui sont reliés fonctionnellement à un organe d'entraînement (69) commun.

27. Machine de balayage selon la revendication 26, caractérisée en ce que les essieux de roues séparés (51) sont reliés à l'organe d'entraînement, par exemple un vérin de positionnement hydraulique ou pneumatique, une transmission à manivelle manuelle au un moteur électrique (69) fonctionnant sur batterie, par l'intermédiaire d'un dispositif de synchronisation, par exemple une traverse, une transmission synchrone ou une transmission à chaîne (68).

28. Machine de balayage selon la revendication 25, 26 ou 27, caractérisée en ce qu'a l'un ou à plusieurs essieux de roues, en particulier séparés, est associée une glissière de guidage (62) s'étendant dans la direction de marche (16).

29. Machine de balayage selon la revendication 28, caractérisée par un cadre coulissant (63) mobile le long de la glissière de guidage (62), sur lequel agit, en vue de son déplacement (61), l'organe d'entraînement (69), et sur lequel est suspendu l'essieu de roues (51).

30. Machine de balayage selon la revendication 29, caractérisée par un entraînement à vis (65, 66) comprenant un écrou de vis (65) fixé sur le cadre coulissant (63) et, engrenant par son filetage intérieur, avec une vis (66) qui est entraînée en rotation par l'organe d'entraînement (69).

31. Machine de balayage selon la revendication 28, 29 ou 30, caractérisée par un capot en forme de carter, pour la glissière de guidage et/ou la vis.

32. Machine de balayage selon l'une des revendications précédentes, comprenant un train de roulement (5), caractérisée par une unité de traitement du sol (4) qui peut s'appuyer, par l'intermédiaire d'une roulette de palpage du sol (78) montée à l'avant, sur sa surface d'appui au sol (79, 80), et qui est guidée pour pouvoir être déplacée, en particulier pour pouvoir être dégagée vers le haut, au moyen d'un système de guidage à parallélogramme (73), articulé sur un châssis ou un support (50) du train de roulement (5).

33. Machine de balayage selon la revendication 32, caractérisée en ce que la roulette de palpage (78) est reliée en position fixe (77) à l'unité de traitement du sol (4) ou au carter de celle-ci.

34. Machine de balayage selon la revendication 32 ou 33, caractérisée en ce que l'unité de traitement du sol (4) est rattachée ou suspendue au système de guidage à parallélogramme (73), en quatre points et/ou de façon lâche ou amovible.
